# DEMANDE DE BREVET EUROPEEN

(11) **EP 0 869 311 A1**
(43) Date de publication de la demande: **07.10.1998**
(21) Numéro de dépôt: 98400706.2
(22) Date de dépôt: 26.03.1998
(51) Int. Cl.: F17D 5/06

(54) **Dispositif de sécurité pour installation de distribution de fluide**

(30) Priorité: 04.04.1997 FR 9704138; 11.07.1997 FR 9708846
(71) Demandeur: Ferkatou, Mourad, 95000 Cergy (FR)
(72) Inventeur: Ferkatou, Mourad, 95000 Cergy (FR)
(74) Mandataire: Tanguy, Gilbert André

(57) **Abrégé**

Dispositif de sécurité pour une installation de distribution reliée à un réseau d'alimentation de fluide sous pression, notamment un réseau d'alimentation d'eau ou de gaz.

Selon l'invention, le dispositif comporte un circuit fluidique incluant au moins une électrovanne (EV) et deux pressostats, respectivement un pressostat haut (P₁) et un pressostat bas (P₂), et un circuit électrique logique comprenant des moyens de commande pour ouvrir ladite électrovanne si la pression en aval de l'électrovanne chute brusquement et pour la fermer si elle entre dans l'intervalle défini par les deux pressostats (P₁, P₂).

## Description

L'invention se rapporte à un dispositif de sécurité pour une installation de distribution de fluide dans un local, tel qu'une maison ou un appartement ou une entreprise, reliée, généralement par un compteur, à un réseau d'alimentation de fluide sous pression. Le dispositif objet de l'invention est destiné à être intercalé en série et en amont d'une telle installation pour intervenir automatiquement et isoler ladite installation en cas de fuite ou de consommation anormale due à un robinet ou une vanne défectueuse, une tuyauterie percée ou des joints usés, voire une étourderie de l'utilisateur. L'invention s'applique notamment à toute installation domestique ou industrielle de distribution d'eau, de gaz ou d'huile.

On sait que les dégâts des eaux ou les fuites d'eau ou de gaz ont des conséquences graves et coûteuses dans les immeubles d'habitation ou les entreprises. A titre d'exemple, une fuite de liquide non détectée, goutte à goutte, détériore les sols et fragilise les structures, notamment les poutres. Un dégât des eaux brutal provoque des détériorations jusque dans les étages inférieurs nécessitant des travaux de rénovation, tels que reprise des enduits et peintures. Une fuite permanente au niveau d'un ou plusieurs robinets défectueux se traduit par un gaspillage d'eau, sensible sur la facture payée par le consommateur. Une fuite de gaz peut être à l'origine d'explosions destructrices et meurtrières. Enfin, une fuite d'huile dans une installation de distribution de puissance hydraulique peut avoir des conséquences néfastes dans l'industrie.

L'invention apporte une solution globale à tous ces problèmes.

L'invention vise un dispositif destiné à être branché, en série dans son ensemble en amont d'une installation de distribution de fluide, par exemple au plus près du compteur, pour détecter certaines conditions anormales, notamment une fuite ou la mauvaise fermeture d'un robinet ou d'une vanne.

Plus précisément, l'invention concerne donc un dispositif de sécurité pour une installation de distribution d'un fluide reliée à un réseau d'alimentation d'un tel fluide sous pression, destiné à être intercalé en série et en amont d'une telle installation, caractérisé en ce qu'il comprend, couplés entre eux :
- un circuit fluidique incluant au moins une électrovanne et deux pressostats respectivement un pressostat haut et un pressostat bas, tous deux fluidiquement couplés en aval de ladite électrovanne, ledit pressostat haut étant réglé à une première pression prédéterminée légèrement inférieure à celle dudit réseau et ledit pressostat bas étant réglé à une seconde pression prédéterminée inférieure à ladite première pression,
- un circuit électrique logique comprenant les contacteurs des pressostats et la bobine de ladite électrovanne, et des moyens de commande pour ouvrir l'électrovanne si la pression en aval de l'électrovanne chute brusquement et pour la fermer, si la pression en aval de ladite électrovanne entre dans l'intervalle compris entre lesdites première et seconde pressions prédéterminées correspondant aux deux pressostats.

Dans la suite du texte, on entend par pressostat, tout dispositif comprenant un élément sensible à la pression, par exemple un élément à membrane, dont le déplacement commande le changement d'état d'un ou plusieurs contacteurs ou inverseurs électriques de composants analogues, tandis qu'une électrovanne est constituée d'une partie fluidique comprenant un boisseau ou analogue autorisant ou empêchant l'écoulement du fluide, ledit boisseau étant commandé par une bobine. En outre, les moyens de commande comprennent, comme on le verra plus loin, des moyens formant relais, éventuellement temporisés. Un moyen formant relais peut être constitué par un électro-aimant commandant un ou plusieurs contacteurs et/ou inverseurs électriques et un moyen formant relais temporisé aura la même structure complétée pour retarder le changement d'état du ou des contacteurs et/ou inverseurs, d'une durée prédéterminée après l'alimentation de la bobine de l'électro-aimant. Tous ces dispositifs sont des composants connus disponibles dans le commerce.

Dans le cas où les moyens de commande utilisent de tels moyens formant relais, en liaison avec les électrovannes et pressostats mentionnés ci-dessus, un dispositif conforme à l'invention est caractérisé en ce qu'il comporte deux électrovannes montées en cascade. Une électrovanne amont est commandée à l'ouverture par un contacteur normalement ouvert d'un moyen formant relais lui-même piloté par l'intermédiaire d'un branchement en série, de deux contacteurs normalement ouverts appartenant respectivement aux deux pressostats. De plus, ce dispositif peut être caractérisé en ce que, ledit contacteur dudit pressostat bas étant un inverseur, l'électrovanne aval est commandée à la fermeture par un premier moyen formant relais temporisé, lui-même commandé par l'intermédiaire d'un branchement en série dudit contacteur normalement ouvert dudit pressostat haut et du contacteur normalement fermé dudit inverseur dudit pressostat bas.

Une simplification avantageuse consiste à n'utiliser qu'une seule électrovanne commandée à l'ouverture comme l'électrovanne amont, et, à la fermeture, comme l'électrovanne aval. Pour ce faire, ledit branchement en série des deux contacteurs appartenant respectivement au deux pressostats et commandant ledit premier moyen formant relais temporisé peut être shunté par un contacteur normalement ouvert dudit premier moyen formant relais temporisé. Ceci permet d'éviter que l'électrovanne ne s'ouvre intempestivement dès que la pression diminue en raison de la fuite, puisque le contacteur normalement fermé dudit inverseur du pressostat bas est shunté.

Bien entendu, un circuit électrique logique réalisé à partir de composants électromécaniques, tels que notamment des moyens formant relais, peut facilement être modifié par des circuits logiques électroniques commandant des transistors de puissance ou des thyristors alimentant les électrovannes. Un tel mode de réalisation est du domaine de l'invention par équivalence de fonctions.

L'invention sera mieux comprise et les avantages de celle-ci apparaîtront plus clairement à la lumière de la description qui va suivre, donnée uniquement à titre d'exemple et faite en référence aux dessins annexés dans lesquels :
- la figure 1 est un schéma de principe d'un circuit fluidique formant une partie du dispositif de sécurité ;
- la figure 2 est un schéma de principe du circuit électrique logique associé au circuit fluidique de la figure 1 ;
- la figure 3 est un schéma de principe d'un autre mode de réalisation de circuit fluidique, simplifié, comparable à celui de la figure 1 ; et
- la figure 4 est un schéma de principe du circuit électrique logique associé au circuit fluidique de la figure 3.

Dans la suite, les modes de réalisation décrits sont appliqués à une installation de distribution d'eau, mais ils pourraient convenir pour une installation de distribution de gaz domestique ou industrielle et, de façon générale, pour toute installation de distribution de fluide sous pression.

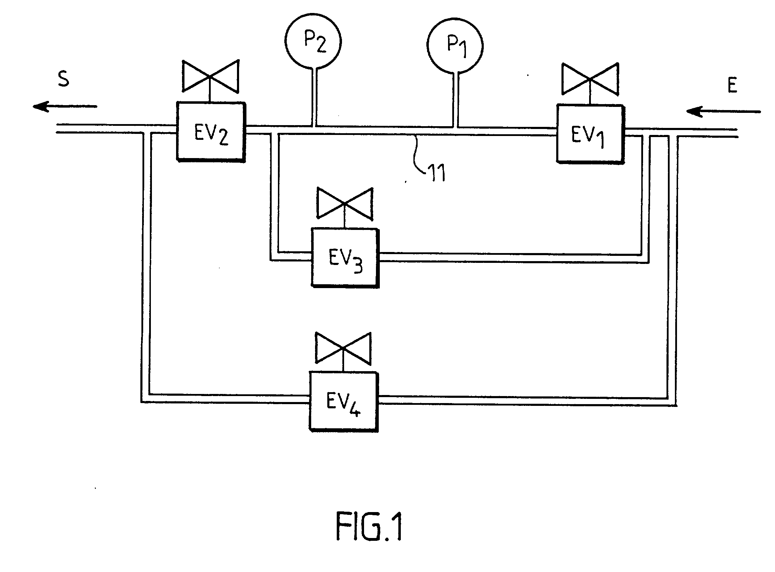

En se reportant plus particulièrement à la figure 1, on note que la partie fluidique (ici partie hydraulique) du dispositif de sécurité se compose essentiellement de quatre électrovannes et de deux pressostats. On distingue une entrée E destinée à être reliée à un réseau d'alimentation sous pression (service d'eau urbain) et une sortie S destinée à être connectée à une installation de distribution d'eau, par exemple pour un local d'habitation. Cette sortie est de préférence connectée immédiatement en amont du compteur d'eau de cette installation. Entre l'entrée et la sortie, se trouve agencé un montage en cascade de deux électrovannes EV₁ et EV₂. L'électrovanne EV₁, la plus proche de l'entrée E, est appelée électrovanne amont et l'électrovanne EV₂, la plus proche de la sortie S, est appelée électrovanne aval. Un tronçon de conduit 11 relie la sortie de l'électrovanne EV₁ à l'entrée de l'électrovanne EV₂. A ce tronçon de conduit, sont raccordées les parties hydrauliques des deux pressostats P₁ et P₂. Le pressostat P₁ ou pressostat haut est réglé à une première pression prédéterminée, légèrement inférieure à celle du réseau d'alimentation d'eau sous pression. Le pressostat P₂ appelé pressostat bas est réglé à une seconde pression prédéterminée, inférieure à ladite première pression, par exemple inférieure d'une valeur de l'ordre de 1 bar. Par ailleurs, l'électrovanne EV₃ est hydrauliquement connectée en parallèle sur l'électrovanne amont EV₁, tandis que la quatrième électrovanne EV₄ est hydrauliquement connectée en parallèle sur le branchement en cascade desdites électrovannes EV₁ et EV₂ .

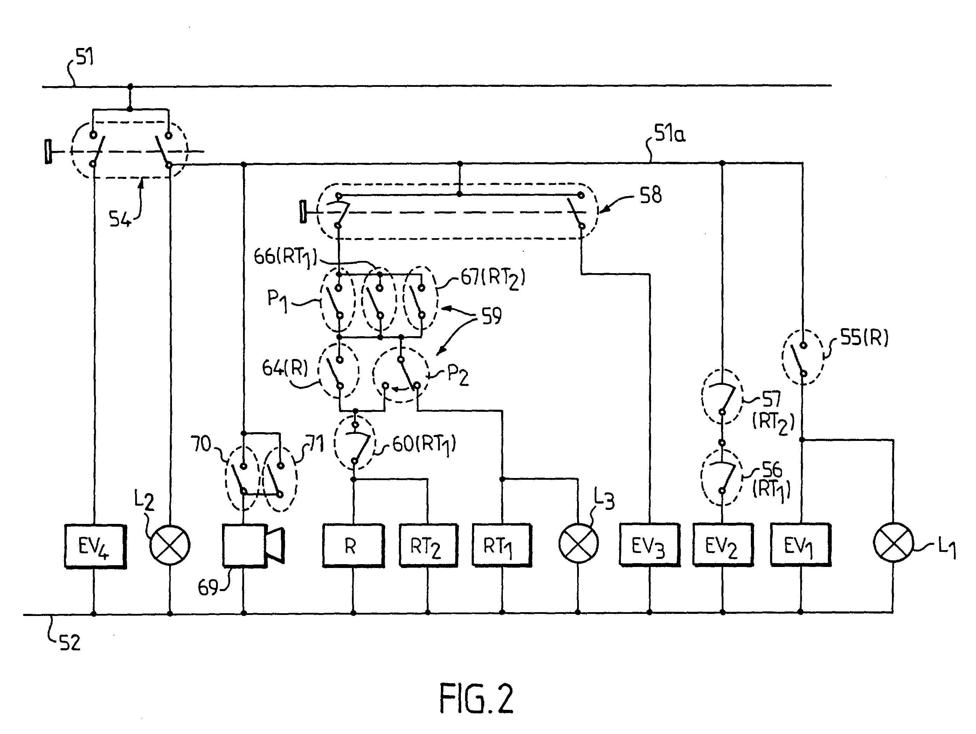

En considérant maintenant, plus particulièrement, la figure 2, on a représenté notamment les bobines de commande des différentes électrovannes, qui portent les mêmes références, c'est-à-dire EV₁, EV₂, EV₃ et EV₄, et les contacteurs ou inverseurs électriques associés aux pressostats P₁ et P₂ qui portent également les mêmes références numériques. Le circuit électrique logique qui est représenté sur la figure 2 comporte en outre un moyen formant relais R, à action immédiate, et deux moyens formant relais temporisés RT₁ et RT₂. La temporisation associée au relais RT₁ est courte, par exemple de l'ordre de quelques secondes, tandis que la temporisation associée au relais RT₂ est longue, par exemple de l'ordre de 20 minutes. On entend par temporisation, le temps qui s'écoule entre le moment où une tension de commande est appliquée au relais et le moment où le ou les contacteurs et/ou inverseurs de ce relais changent d'état. Dans la suite du texte, on entend par contacteur normalement ouvert, un interrupteur électrique commandé par un relais ou un pressostat qui se ferme lorsque ledit relais ou pressostat est actionné par un courant électrique ou une pression, respectivement et par contacteur normalement fermé, un interrupteur qui s'ouvre dans les mêmes circonstances. De même, dans le cas où un contacteur constitue un inverseur, on considérera qu'il est constitué d'un contacteur normalement ouvert et d'un contacteur normalement fermé présentant une borne commune. Il est en outre à noter que, s'agissant d'un composant électrique, l'état ouvert signifie que le courant ne peut passer, tandis que l'état fermé signifie que le courant peut passer. En revanche, s'agissant d'une électrovanne, l'état ouvert signifie que l'eau ou le fluide peut s'écouler à travers celle-ci et l'état fermé signifie que l'eau ou le fluide ne peut s'écouler.

Le circuit électrique logique représenté sur la figure 2, n'est qu'un mode de réalisation possible parmi d'autres de moyens de commande pour ouvrir l'électrovanne amont EV₁, si la pression dans le tronçon de conduit chute brusquement et pour fermer l'électrovanne aval EV₂, si la pression dans ledit conduit entre dans l'intervalle compris entre lesdites première et seconde pressions prédéterminées correspondant aux deux pressostats P₁ et P₂. La fonction qui vient d'être énoncée constitue un principe de base de la commande des deux électrovannes principales EV₁ et EV₂. Une tension d'alimentation est appliquée entre deux conducteurs 51, 52. Le système peut fonctionner, selon les composants choisis sous la tension normale du réseau de distribution électrique (220 volts alternatifs) ou sous une tension plus basse, (par exemple 24 volts) continue ou alternative. Par commodité, on appellera la ligne 51 une ligne d'alimentation, en considérant que la ligne 52 est à un potentiel de référence. La ligne d'alimentation 51 est mise en service par un contacteur normalement ouvert d'un sélecteur de mode de fonctionnement 54 à trois positions. Les trois positions sont : fonctionnement manuel, hors service, fonctionnement automatique. Une ligne 51a se trouve connectée à la ligne 51 dans la position de fonctionnement automatique. L'électrovanne EV₄ est alimentée dans la position de fonctionnement manuel, pour des raisons qui apparaîtront plus loin. L'alimentation est totalement coupée dans la position intermédiaire de mise hors service. Dans ce cas, ni la ligne 51a, ni l'électrovanne EV₄, n'est alimentée. La ligne 51a est connectée pour alimenter l'électrovanne EV₁ à partir d'un contacteur normalement ouvert 55 du relais R. Une lampe de signalisation de débit L₁ est connectée en parallèle sur la partie électrique de l'électrovanne EV₁. Une lampe de signalisation L₂ indique que le dispositif est en état de fonctionnement.

Par ailleurs, la bobine de l'électrovanne EV₂ est alimentée par un contacteur normalement fermé 56 du premier moyen formant relais temporisé RT₁ et par un contacteur normalement fermé 57 du second moyen formant relais temporisé RT₂ ,connectés en série. La ligne 5 la est également connectée à un moyen de commande de réinitialisation 58 à actionnement manuel comprenant un contacteur normalement fermé et un contacteur normalement ouvert. Le contacteur normalement ouvert est connecté en série avec la bobine d'alimentation de l'électrovanne EV₃. Le contacteur normalement fermé est connecté en série avec les moyens de commande 59 précités permettant de piloter les électrovannes EV₁ et EV₂, essentiellement par la commande des relais R, RT₁ et RT₂. Plus précisément, l'électrovanne amont EV₁ qui est commandée par un contacteur normalement ouvert 55 du relais R ne peut s'ouvrir que si celui-ci est piloté. Comme représenté, le relais R est piloté par un branchement en série de deux contacteurs normalement ouverts appartenant respectivement aux deux pressostats P₁ et P₂. Le branchement en série de ces deux contacteurs est relié d'une part au contacteur normalement fermé du moyen de commande de réinitialisation 58 et au relais R, d'autre part, par l'intermédiaire d'un contacteur normalement fermé 60 du premier relais temporisé RT₁. D'autre part, on remarque que le contacteur du pressostat bas P₂ est en fait un inverseur, tel que défini ci-dessus. Et l'électrovanne aval EV₂ est commandée à la fermeture lorsque le premier relais temporisé RT₁ change d'état. Celui-ci est commandé par l'intermédiaire d'un branchement en série dudit contacteur normalement ouvert P₁ du pressostat haut et du contacteur normalement fermé de l'inverseur P₂ du pressostat bas. Par ailleurs, le contacteur normalement ouvert de l'inverseur du pressostat bas, pilotant le moyen formant relais R, est shunté par un contacteur normalement ouvert 64 du moyen formant relais lui-même. On note que la bobine du second relais temporisé RT₂ est montée en parallèle sur celle du premier moyen formant relais R. En outre, une lampe de signalisation de défaut L₃ est connectée en parallèle sur le premier relais temporisé RT₁.

Par ailleurs, le contacteur normalement ouvert P₁ du pressostat haut, qui pilote le moyen formant relais R, est lui-même shunté par un contacteur normalement ouvert 66 dudit premier moyen formant relais temporisé RT₁ et par un contacteur normalement ouvert 67 dudit second moyen formant relais temporisé RT₂.

Un dispositif d'alarme sonore 69 est alimenté par la ligne 51a, à partir d'un contacteur normalement ouvert 70 du premier relais temporisé RT₁, lui-même shunté par un contacteur normalement ouvert 71 dudit second relais temporisé RT₂. Le fonctionnement est le suivant.

En fonctionnement normal, c'est-à-dire lorsque le sélecteur 54 est en position de fonctionnement automatique et lorsque le moyen de commande de réinitialisation 58 n'est pas actionné, il est clair que la ligne 51a est sous tension et que seule la bobine de l'électrovanne EV₂ est alimentée. Par conséquent, les parties hydrauliques des électrovannes EV₁, EV₃ et EV₄, sont fermées, tandis que la partie hydraulique de l'électrovanne EV₂ est ouverte. C'est la situation lorsque l'installation est en service, mais qu'aucun robinet n'est ouvert. On n'observe donc aucun débit à travers les électrovannes EV₁ et EV₂. Les pressostats P₁ et P₂ reçoivent la même pression qui est celle du réseau, avant la précédente fermeture de EV₁. Par conséquent, le relais R n'est pas alimenté et le contacteur 55 en série avec la bobine de l'électrovanne EV₁ reste ouvert.

Si l'utilisateur ouvre un robinet de l'installation, on observe d'abord une chute brutale de la pression en aval de l'électrovanne EV₁, ce qui déclenche le changement d'état des pressostats P₁ et P₂. Dès lors, le contacteur commandé par le pressostat P₁ et l'inverseur commandé par le pressostat P₂ changent d'état, ce qui conduit à alimenter les bobines du moyen formant relais R et du second moyen formant relais temporisé RT₂. Par conséquent, la bobine de l'électrovanne EV₁ est alimentée et l'eau s'écoule normalement depuis le réseau vers l'installation, tant que le robinet (ou plusieurs) est ouvert.

Cependant, si le débit se prolonge pendant une période de temps jugée anormale (par exemple, 20 minutes), le second moyen formant relais temporisé RT₂ provoque le changement d'état du contacteur 57 en série avec la bobine de l'électrovanne EV₂, ce qui aboutit à la fermeture de l'électrovanne EV₂. De même, le contacteur normalement ouvert 71 en série avec les moyens d'alarme se ferme, ce qui provoque l'émission d'un signal sonore avertissant l'utilisateur du fait qu'un robinet a été laissé ouvert par inadvertance. Cet agencement peut permettre d'éviter un dégât des eaux résultant, par exemple, d'un débordement d'une baignoire ou d'un évier.

Si l'utilisateur referme normalement tous les robinets, la pression remonte au-delà de la valeur du pressostat P₁, ce qui aboutit à refermer l'électrovanne EV₁.

Tout ce qui précède illustre un fonctionnement normal de l'installation avec adjonction d'une sécurité anti-débordement.

Une première anomalie peut résulter du fait qu'un robinet est mal fermé. Dans ce cas, ce robinet continue à laisser échapper un faible débit d'eau. Dans cette situation, l'électrovanne EV₁ est encore ouverte et le faible débit entraîne une remontée de pression en aval de cette électrovanne. La mauvaise fermeture du robinet entraîne le fait que la remontée de pression n'atteint pas la pression du pressostat P₁, mais dépasse celle du pressostat P₂. Il en résulte que l'inverseur piloté par le pressostat P₂ change d'état, de sorte que la bobine du premier relais temporisé RT₁ est alimentée, de même que la lampe L₃ qui signale le défaut correspondant. Au bout d'un intervalle relativement court, déterminé par ledit premier relais temporisé, celui-ci commande l'ouverture du contacteur 56 normalement fermé en série avec la bobine de l'électrovanne EV₂. Par conséquent, l'électrovanne EV₂ se ferme, ce qui arrête l'écoulement d'eau dans l'installation.

Une autre anomalie de fonctionnement peut résulter d'une fuite dans le circuit de l'installation. Dans ce cas, l'électrovanne EV₁ est généralement fermée, puisque l'utilisateur ne fait pas couler d'eau. La pression immédiatement en aval de cette électrovanne diminue progressivement et passe en-dessous du seuil déterminé par le pressostat P₁. Dans ce cas de figure, l'inverseur associé au pressostat P₂ est dans sa position de repos, illustrée sur la figure 2. Au changement d'état de P₁, le relais RT₁ est directement alimenté et ferme EV₂ au bout d'un intervalle de temps court prédéterminé, sans que l'électrovanne EV₁ n'ait été ouverte. Par conséquent, le basculement du pressostat P₁ commande alors la fermeture de l'électrovanne EV₂.

Dans tous les cas de défaut analysés ci-dessus, on aboutit à la fermeture de l'électrovanne EV₂. Une remise en service de l'installation, après disparition de l'anomalie, nécessite l'actionnement du moyen de commande de réinitialisation 58. Celui-ci a pour conséquence d'ouvrir l'électrovanne EV₃ qui rétablit la pression du réseau dans le tronçon de conduit 11 situé entre les électrovannes EV₁ et EV₂, et de couper l'alimentation électrique des moyens de commande 59 définis ci-dessus, c'est-à-dire les contacteurs et inverseurs commandant les relais R, RT₁ et RT₂. Ceci a pour conséquence de replacer les électrovannes dans des positions d'attente normales. Ces conditions sont maintenues lorsque l'utilisateur relâche le moyen de commande de réinitialisation. Les contacteurs associées aux relais temporisés RT₁ et RT₂ en parallèle sur le contacteur du pressostat P₁ permettent de faire face au coup de bélier qui peut se produire à la fermeture simultanée des électrovannes EV₁ et EV₂, pour empêcher un fonctionnement intempestif du contacteur relié au pressostat P₁.

Si un professionnel désire mettre hors service pendant une durée déterminée le dispositif de sécurité qui vient d'être décrit, il lui suffit de placer le contacteur 54 dans la position de fonctionnement manuel, ce qui aboutit à la suppression de l'alimentation de la ligne 51a et à l'alimentation de l'électrovanne EV₄ qui rétablit une connexion directe entre le réseau et l'installation. Lorsque le contacteur est dans la position intermédiaire de mise hors service, ni le dispositif, ni l'électrovanne EV₄, n'est alimentée, de sorte que l'installation est complètement déconnectée du réseau.

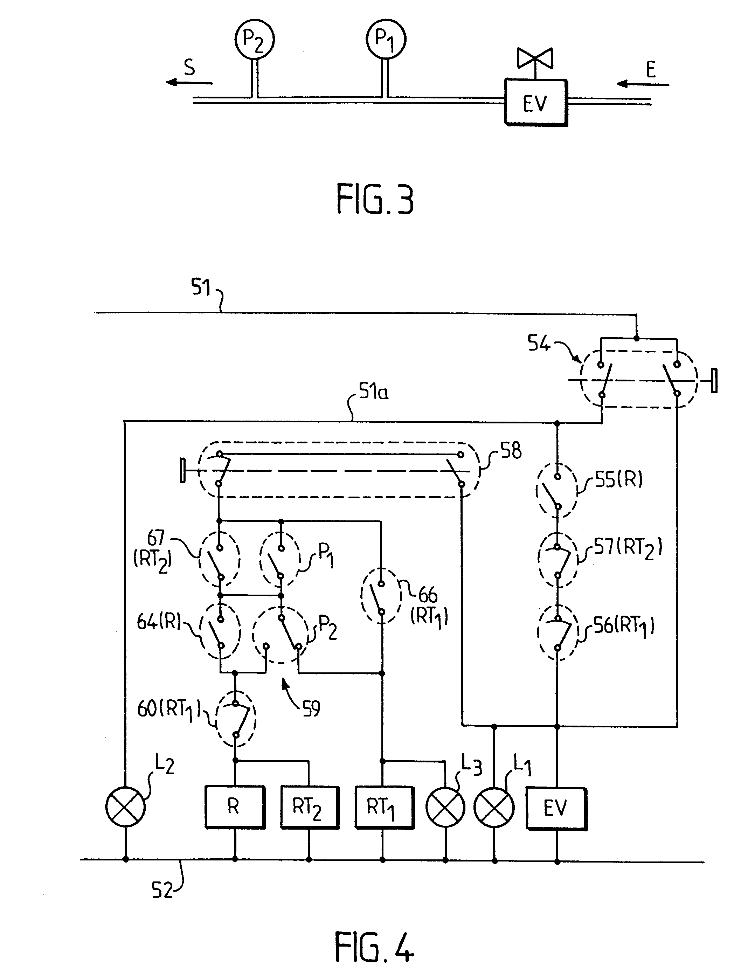

En se reportant plus particulièrement à la figure 3, on note que la partie fluidique (ici partie hydraulique) du dispositif de sécurité se compose essentiellement d'une électrovanne et de deux pressostats. Ce mode de réalisation fait donc l'économie de trois électrovannes par rapport au précédent. On distingue une entrée E destinée à être reliée à un réseau d'alimentation sous pression (service d'eau urbain) et une sortie S destinée à être connectée à une installation de distribution d'eau, par exemple pour un local d'habitation. Cette sortie est de préférence connectée immédiatement en amont du compteur d'eau de cette installation. Entre l'entrée et la sortie, se trouve l'électrovanne EV. A la sortie hydraulique de l'électrovanne EV, sont raccordées les parties hydrauliques des deux pressostats P₁ et P₂. Le pressostat P₁ ou pressostat haut est réglé à une première pression prédéterminée, légèrement inférieure à celle du réseau d'alimentation d'eau sous pression. Le pressostat P₂ appelé pressostat bas est réglé à une seconde pression prédéterminée, inférieure à ladite première pression, par exemple inférieure d'une valeur de l'ordre de 1 bar.

En considérant maintenant, plus particulièrement, la figure 4, on a représenté notamment la bobine de commande de l'électrovanne, qui porte la même référence, c'est-à-dire EV, et les contacteurs ou inverseurs électriques associés aux pressostats P₁ et P₂ qui portent également les mêmes références numériques. Le circuit électrique logique qui est représenté sur la figure 2 comporte en outre un moyen formant relais R, à action immédiate, et deux moyens formant relais temporisés RT₁ et RT₂. La temporisation associée au relais RT₁ est courte, par exemple de l'ordre de quelques secondes, tandis que la temporisation associée au relais RT₂ est longue, par exemple de l'ordre de 20 minutes.

Le circuit électrique logique représenté sur la figure 2, n'est qu'un mode de réalisation possible parmi d'autres de moyens de commande pour ouvrir l'électrovanne EV, si la pression en aval de celle-ci chute brusquement et pour la fermer si cette pression entre dans l'intervalle compris entre lesdites première et seconde pressions prédéterminées correspondant aux deux pressostats P₁ et P₂. La fonction qui vient d'être énoncée constitue un principe de base de la commande de l'électrovanne. Une tension d'alimentation est appliquée entre deux conducteurs 51, 52. Le système peut fonctionner, selon les composants choisis sous la tension normale du réseau de distribution électrique (220 volts alternatifs) ou sous une tension plus basse, (par exemple 24 volts) continue ou alternative. Par commodité, on appellera la ligne 51 une ligne d'alimentation, en considérant que la ligne 52 est à un potentiel de référence. La ligne d'alimentation 51 est mise en service par un contacteur normalement ouvert d'un sélecteur de mode de fonctionnement 54 à trois positions. Les trois positions sont : fonctionnement manuel, hors service, fonctionnement automatique. Une ligne 5 la se trouve connectée à la ligne 51 dans la position de fonctionnement automatique. L'électrovanne EV est alimentée dans la position de fonctionnement manuel par une liaison 53, pour des raisons qui apparaîtront plus loin. L'alimentation est totalement coupée dans la position intermédiaire de mise hors service. Dans ce cas, ni la ligne 51a, ni l'électrovanne EV, n'est alimentée. La ligne 51a est connectée pour alimenter l'électrovanne EV à partir d'un contacteur normalement ouvert 55 du relais R. Une lampe de signalisation de débit L₁ est connectée en parallèle sur la partie électrique de l'électrovanne EV. Une lampe de signalisation L₂ connectée à la ligne 51a indique que le dispositif est en état de fonctionnement.

La bobine de l'électrovanne EV est connectée entre les lignes 51a et 52 via une liaison en série comprenant ledit contacteur 55, un contacteur normalement fermé 56 du premier moyen formant relais temporisé RT₁ et un contacteur normalement fermé 57 du second moyen formant relais temporisé RT₂. La ligne 51a est également connectée à un moyen de commande de réinitialisation 58 à actionnement manuel comprenant un contacteur normalement fermé et un contacteur normalement ouvert. Le contacteur normalement ouvert est connecté à l'électrovanne EV. Le contacteur normalement fermé est connecté en série avec des moyens de commande 59 permettant de piloter l'électrovanne EV, essentiellement par la commande des relais R, RT₁ et RT₂. Plus précisément, l'électrovanne amont EV qui est commandée par un contacteur normalement ouvert 55 du relais R ne peut s'ouvrir que si celui-ci est piloté. Comme représenté, le relais R est piloté par un branchement en série de deux contacteurs normalement ouverts appartenant respectivement aux deux pressostats P₁ et P₂. Le branchement en série de ces deux contacteurs est relié d'une part au contacteur normalement fermé du moyen de commande de réinitialisation 58 et au relais R, d'autre part, par l'intermédiaire d'un contacteur normalement fermé 60 du premier relais temporisé RT₁. D'autre part, on remarque que le contacteur du pressostat bas P₂ est en fait un inverseur, tel que défini ci-dessus. Et l'électrovanne EV est commandée à la fermeture lorsque le premier relais temporisé RT₁ change d'état. Celui-ci est commandé par l'intermédiaire d'un branchement en série dudit contacteur normalement ouvert P₁ du pressostat haut et du contacteur normalement fermé de l'inverseur P₂ du pressostat bas. Par ailleurs, le contacteur normalement ouvert de l'inverseur du pressostat bas, pilotant le moyen formant relais R, est shunté par un contacteur normalement ouvert 64 du moyen formant relais lui-même. On note que la bobine du second relais temporisé RT₂ est montée en parallèle sur celle du premier moyen formant relais R. En outre, une lampe de signalisation de défaut L₃ est connectée en parallèle sur le premier relais temporisé RT₁.

Par ailleurs, le contacteur normalement ouvert P₁ du pressostat haut, qui pilote le moyen formant relais R, est lui-même shunté par un contacteur normalement ouvert 67 dudit second moyen formant relais temporisé RT₂, tandis que le branchement en série du contacteur normalement ouvert du pressostat P₁ et du contacteur normalement fermé de l'inverseur du pressostat P₂ est shunté par un contacteur normalement ouvert 66 du premier moyen formant relais temporisé RT₁.

En fonctionnement normal, c'est-à-dire lorsque le sélecteur 54 est en position de fonctionnement automatique et lorsque le moyen de commande de réinitialisation 58 n'est pas actionné, il est clair que la ligne 51a est sous tension. La partie hydraulique de l'électrovanne EV est fermée. C'est la situation lorsque l'installation est en service, mais qu'aucun robinet n'est ouvert. On n'observe donc aucun débit à travers l'électrovannes EV. Les pressostats P₁ et P₂ reçoivent la même pression qui est celle du réseau, avant la précédente fermeture de EV. Par conséquent, le relais R n'est pas alimenté et le contacteur 55 en série avec la bobine de l'électrovanne EV reste ouvert.

Si l'utilisateur ouvre un robinet de l'installation, on observe d'abord une chute brutale de la pression en aval de l'électrovanne EV, ce qui déclenche le changement d'état des pressostats P₁ et P₂. Dès lors, le contacteur commandé par le pressostat P₁ et l'inverseur commandé par le pressostat P₂ changent d'état, ce qui conduit à alimenter les bobines du moyen formant relais R et du second moyen formant relais temporisé RT₂. Par conséquent, la bobine de l'électrovanne EV est alimentée et l'eau s'écoule normalement depuis le réseau vers l'installation, tant que le robinet (ou plusieurs) est ouvert.

Cependant, si le débit se prolonge pendant une période de temps jugée anormale (par exemple, 20 minutes), le second moyen formant relais temporisé RT₂ provoque le changement d'état du contacteur 57 en série avec la bobine de l'électrovanne EV, ce qui aboutit à la fermeture de l'électrovanne EV. Cet agencement peut permettre d'éviter un dégât des eaux résultant, par exemple, d'un débordement d'une baignoire ou d'un évier.

Si l'utilisateur referme normalement tous les robinets, la pression remonte au-delà de la valeur du pressostat P₁, ce qui aboutit à refermer l'électrovanne EV.

Tout ce qui précède illustre un fonctionnement normal de l'installation avec adjonction d'une sécurité anti-débordement.

Une première anomalie peut résulter du fait qu'un robinet est mal fermé. Dans ce cas, ce robinet continue à laisser échapper un faible débit d'eau. Dans cette situation, l'électrovanne EV est encore ouverte et le faible débit entraîne une remontée de pression en aval de cette électrovanne. La mauvaise fermeture du robinet entraîne le fait que la remontée de pression n'atteint pas la pression du pressostat P₁, mais dépasse celle du pressostat P₂. Il en résulte que l'inverseur piloté par le pressostat P₂ change d'état, de sorte que la bobine du premier relais temporisé RT₁ est alimentée, de même que la lampe L₃ qui signale le défaut correspondant. Au bout d'un intervalle relativement court, déterminé par ledit premier relais temporisé, celui-ci commande l'ouverture du contacteur 56 normalement fermé en série avec la bobine de l'électrovanne EV. Par conséquent, l'électrovanne EV se ferme, ce qui arrête l'écoulement d'eau dans l'installation.

Une autre anomalie de fonctionnement peut résulter d'une fuite dans le circuit de l'installation. Dans ce cas, l'électrovanne EV est généralement fermée, puisque l'utilisateur ne fait pas couler d'eau. La pression immédiatement en aval de cette électrovanne diminue progressivement et passe en-dessous du seuil déterminé par le pressostat P₁. Dans ce cas de figure, l'inverseur associé au pressostat P₂ est dans sa position de repos, illustrée sur la figure 4. Au changement d'état de P₁, le relais RT₁ est directement alimenté et ferme l'électrovanne EV au bout d'un intervalle de temps court prédéterminé. Le contacteur 66 stabilise cet état.

Dans tous les cas de défaut analysés ci-dessus, on aboutit à la fermeture de l'électrovanne EV. Une remise en service de l'installation, après disparition de l'anomalie, nécessite l'actionnement du moyen de commande de réinitialisation 58. Celui-ci a pour conséquence d'ouvrir l'électrovanne EV, ce qui rétablit la pression du réseau dans l'installation, et de couper l'alimentation électrique des moyens de commande 59 définis ci-dessus, c'est-à-dire les contacteurs et inverseurs commandant les relais R, RT₁ et RT₂. Ces conditions sont maintenues lorsque l'utilisateur relâche le moyen de commande de réinitialisation. Les contacteurs 66 et 67 associés aux relais temporisés RT₁ et RT₂ permettent de faire face au coup de bélier qui peut se produire à la fermeture de l'électrovannes EV, pour empêcher un fonctionnement intempestif des contacteurs reliés aux pressostats P₁ et P₂.

Si un professionnel désire mettre hors service pendant une durée déterminée le dispositif de sécurité qui vient d'être décrit, il lui suffit de placer le contacteur 54 dans la position de fonctionnement manuel, ce qui aboutit à la suppression de l'alimentation de la ligne 51a et à l'alimentation de l'électrovanne EV qui rétablit une connexion directe entre le réseau et l'installation. Lorsque le contacteur est dans la position intermédiaire de mise hors service, ni le dispositif, ni l'électrovanne EV, n'est alimentée, de sorte que l'installation est complètement déconnectée du réseau.

## Revendications

1. Dispositif de sécurité pour une installation de distribution d'un fluide reliée à un réseau d'alimentation d'un tel fluide sous pression, destiné à être intercalé en série et en amont d'une telle installation, caractérisé en ce qu'il comprend, couplés entre eux :
- un circuit fluidique incluant au moins une électrovanne (EV, EV₁) et deux pressostats (P₁, P₂) respectivement un pressostat haut et un pressostat bas, tous deux fluidiquement couplés en aval de ladite électrovanne, ledit pressostat haut étant réglé à une première pression prédéterminée légèrement inférieure à celle dudit réseau et ledit pressostat bas étant réglé à une seconde pression prédéterminée inférieure à ladite première pression,
- un circuit électrique logique comprenant les contacteurs des pressostats (P₁, P₂) et la bobine de ladite électrovanne, et des moyens de commande (59) pour ouvrir l'électrovanne si la pression en aval de l'électrovanne chute brusquement et pour la fermer, si la pression en aval de ladite électrovanne3entre dans l'intervalle compris entre lesdites première et seconde pressions prédéterminées correspondant aux deux pressostats.

2. Dispositif selon la revendication 1, caractérisé en ce que ledit circuit fluidique comprend deux électrovannes (EV, EV₁) montées en cascade, respectivement une électrovanne amont et une électrovanne aval, en ce que lesdits pressostats (P₁, P₂) sont tous deux couplés à un tronçon de conduit (11) reliant les deux électrovannes, en ce que ledit circuit électrique logique comprend les bobines des deux électrovannes et en ce que les moyens de commande précités sont agencés pour ouvrir l'électrovanne amont si la pression dans ledit tronçon de conduit chute brusquement et pour fermer l'électrovanne aval si la pression dans ledit tronçon de conduit entre dans l'intervalle compris entre lesdites première et seconde pressions prédéterminées.

3. Dispositif selon la revendication 2, caractérisé en ce que ladite électrovanne amont (EV₁) est commandée à l'ouverture par un contacteur normalement ouvert (55) d'un moyen formant relais (R) lui-même piloté par l'intermédiaire d'un branchement en série de deux contacteurs normalement ouverts, appartenant respectivement aux deux pressostats (P₁, P₂).

4. Dispositif selon la revendication 3, caractérisé en ce que, ledit contacteur dudit pressostat bas étant un inverseur, ladite électrovanne aval (EV₂) est commandée à la fermeture par un premier moyen formant relais temporisé (RT₁), lui-même commandé par l'intermédiaire d'un branchement en série dudit contacteur normalement ouvert dudit pressostat haut et du contacteur normalement fermé dudit inverseur dudit pressostat bas.

5. Dispositif selon l'une des revendications 2 à 4, caractérisé en ce qu'il comporte une troisième électrovanne (EV₃) dont la partie fluidique est montée en parallèle sur ladite électrovanne amont et en ce que cette électrovanne est commandée par l'intermédiaire d'un contacteur normalement ouvert d'un moyen de commande de réinitialisation (58) dont un contacteur normalement fermé est intercalé en série entre ladite ligne d'alimentation (51a) et les moyens de commande (59) précités desdites électrovannes amont et aval.

6. Dispositif selon l'une des revendications 2 à 5, caractérisé en ce qu'il comporte une quatrième électrovanne (EV₄) dont la partie fluidique est en parallèle sur le branchement en cascade desdites électrovannes amont et aval, et qui est commandée par un sélecteur de mode de fonctionnement (54) connecté entre ladite ligne d'alimentation et la bobine de ladite quatrième électrovanne.

7. Dispositif selon la revendication 3 ou 4, caractérisé en ce que ledit contacteur normalement ouvert dudit pressostat bas (P₂) pilotant ledit moyen formant relais (R), est shunté par un contacteur normalement ouvert (64) dudit moyen formant relais.

8. Dispositif selon la revendication 3 ou 4, caractérisé en ce que ledit contacteur normalement ouvert du pressostat haut (P₁) pilotant ledit moyen formant relais (R), est shunté par un contacteur normalement ouvert (66) dudit premier moyen formant relais temporisé.

9. Dispositif selon la revendication 4, caractérisé en ce qu'il comporte un moyen d'alarme (69) alimenté via un contacteur normalement ouvert (70) dudit premier moyen formant relais temporisé.

10. Dispositif de sécurité selon la revendication 1, caractérisé en ce que ladite électrovanne (EV) est commandée à l'ouverture par un contacteur normalement ouvert (55) d'un moyen formant relais (R), lui-même piloté par l'intermédiaire d'un branchement en série de deux contacteurs normalement ouverts, appartenant respectivement aux deux pressostats (P₁, P₂).

11. Dispositif selon la revendication 10, caractérisé en ce que ledit contacteur dudit pressostat bas (P₂) étant un inverseur, ladite électrovanne est commandée à la fermeture par un premier moyen formant relais temporisé (RT₁), lui-même commandé par l'intermédiaire d'un branchement en série dudit contacteur normalement ouvert dudit pressostat haut (P₁) et du contacteur normalement fermé dudit inverseur dudit pressostat bas (P₂).

12. Dispositif selon la revendication 11, caractérisé en ce que ledit branchement en série dudit contacteur normalement ouvert du pressostat haut et dudit contacteur normalement fermé de l'inverseur dudit pressostat bas (P₂) est shunté par un contacteur normalement ouvert (66) dudit premier moyen formant relais temporisé (RT₁).

13. Dispositif selon l'une des revendications 10 à 12, caractérisé en ce ladite électrovanne (EV₁) est commandée par l'intermédiaire d'un contacteur normalement ouvert d'un moyen de commande de réinitialisation (58) dont un contacteur normalement fermé est intercalé en série entre ladite ligne d'alimentation (51ₐ) et les moyens de commande (59) de ladite électrovanne (EV).

14. Dispositif selon l'une des revendications 10 à 13, caractérisé en ce qu'il comporte un sélecteur de mode de fonctionnement (54) dont un contacteur est connecté entre ladite ligne d'alimentation et la bobine de ladite électrovanne (EV).

15. Dispositif selon l'une des revendications 4 ou 11, caractérisé en ce qu'un contacteur normalement fermé dudit premier relais temporisé (RT₁) est intercalé entre ledit relais (R) et ledit branchement en série des deux contacteurs appartenant aux deux pressostats.

16. Dispositif selon l'une des revendications précédentes, caractérisé en ce qu'il est destiné à une installation de distribution d'eau reliée à un réseau d'alimentation d'eau sous pression.

17. Dispositif selon l'une des revendications 1 à 15, caractérisé en ce qu'il est destiné à une installation de distribution de gaz, reliée à un réseau d'alimentation de gaz sous pression.
